# FASCICULE DE BREVET EUROPEEN

(11) **EP 3 812 262 B1**
(45) Date de publication et mention de la délivrance du brevet: **15.02.2023**
(21) Numéro de dépôt: 20202999.7
(22) Date de dépôt: 21.10.2020
(51) Int. Cl.: B64C 1/14

(54) **MÉCANISME DE PORTE D'AÉRONEF, AÉRONEF ET PROCÉDÉ DE DÉPLACEMENT ASSOCIÉS**
TÜRMECHANISMUS EINES LUFTFAHRZEUGS, ENTSPRECHENDES LUFTFAHRZEUG UND TÜRBEWEGUNGSVERFAHREN
DOOR MECHANISM FOR AN AIRCRAFT, ASSOCIATED AIRCRAFT AND MANOEUVRING METHOD

(30) Priorité: 23.10.2019 FR 1911848
(43) Date de publication de la demande: 28.04.2021
(73) Titulaire: Dassault Aviation, 75008 Paris (FR)
(72) Inventeur: CHAMBERS, Patrick, 92214 SAINT CLOUD (FR)
(74) Mandataire: Lavoix

(56) Documents cités:
- WO-A1-84/01140
- US-A- 3 802 125
- US-A- 4 106 729
- US-A- 5 636 814

## Description

La présente invention concerne un mécanisme de porte d'aéronef.

Les documents US 3 802 125, US 5 636 814, US 4 106 729 et WO 84/01140 décrivent des exemples de mécanismes de porte d'aéronef.

Le mécanisme est en particulier destiné d'une part à équiper un aéronef de l'aviation civile, par exemple un avion d'affaires, et d'autre part à équiper une porte d'une soute à bagages de l'aéronef.

Dans les aéronefs connus, les mécanismes de porte comportent généralement des compensateurs de masse mécaniques associés à des câbles, et quatre rails latéraux de guidages de la porte, qui imposent à la porte sa trajectoire. Les mécanismes comportent aussi des poignées intérieur et extérieure de manipulation manuelle de la porte et un mécanisme de verrouillage.

Cependant, ces mécanismes présentent des inconvénients.

Tout d'abord, l'ouverture et la fermeture de la porte, ainsi que son verrouillage et déverrouillage, impliquent des actions de la part de l'utilisateur qui nécessitent des efforts dans des positions parfois inconfortables, malgré la présence des compensateurs de masse mécaniques.

Par exemple, un opérateur doit manipuler une des poignées et monter ou descendre la porte en étant accroupi dans la soute, lorsque l'opérateur est à l'intérieur de l'aéronef, ou en ayant les bras en l'air, lorsqu'il est à l'extérieur.

De plus, les dispositifs mécaniques compensateurs de masse sont particulièrement lourds pour le domaine aéronautique. En particulier, ils sont généralement constitués de ressorts et peuvent peser plusieurs kilogrammes.

De même, les mécanismes de verrouillage connus peuvent peser plusieurs kilogrammes.

Un but de l'invention est donc de fournir un mécanisme de liaison entre une porte d'aéronef et une structure de l'aéronef présentant une bonne ergonomie, un faible encombrement et de masse réduite.

Il est aussi souhaitable qu'un tel mécanisme présente une bonne robustesse, une bonne qualité perçue et de faibles coûts de fabrication.

L'invention a ainsi pour objet un mécanisme de porte d'aéronef selon la revendication 1.

Les revendications 2-9 concernent des configurations avantageuses du mécanisme de l'invention.

Le mécanisme peut en outre comprendre un système de commande électrique du motoréducteur le système de commande électrique étant propre à être activé manuellement par un opérateur.

L'invention concerne aussi un aéronef comportant un mécanisme tel que décrit ci-dessus.

L'aéronef selon l'invention peut être selon les revendications 10 à 12.

L'invention concerne en outre un procédé de déplacement d'une porte d'aéronef selon la revendication 13.

L'invention sera mieux comprise à la lecture de la description qui va suivre, donnée uniquement à titre d'exemple, et faite en se référant aux dessins annexés, sur lesquels :
la figure 1 est une vue schématique d'un aéronef comportant un mécanisme de porte ;
la figure 2 est une vue schématique en perspective du mécanisme de porte d'aéronef, dans lequel la porte est verrouillée dans la position d'obturation ;
les figures 3 et 4 sont des vues schématiques en perspective du mécanisme de la figure 2 ;
la figure 5 est une vue en coupe du mécanisme de la figure 2 ;
la figure 6 est une vue schématique de côté du mécanisme de porte d'aéronef, dans lequel la porte n'est plus verrouillée dans la position d'obturation ;
la figure 7 est une vue en coupe du mécanisme de la figure 6 ;
la figure 8 est une vue schématique de côté du mécanisme de porte d'aéronef lors du déplacement de la porte entre les positions d'obturation et de libération ; et
la figure 9 est une vue schématique de côté du mécanisme de porte d'aéronef, dans lequel la porte est dans la position de libération.

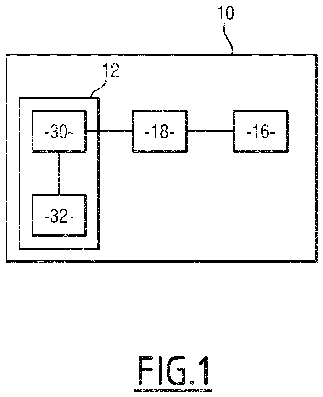

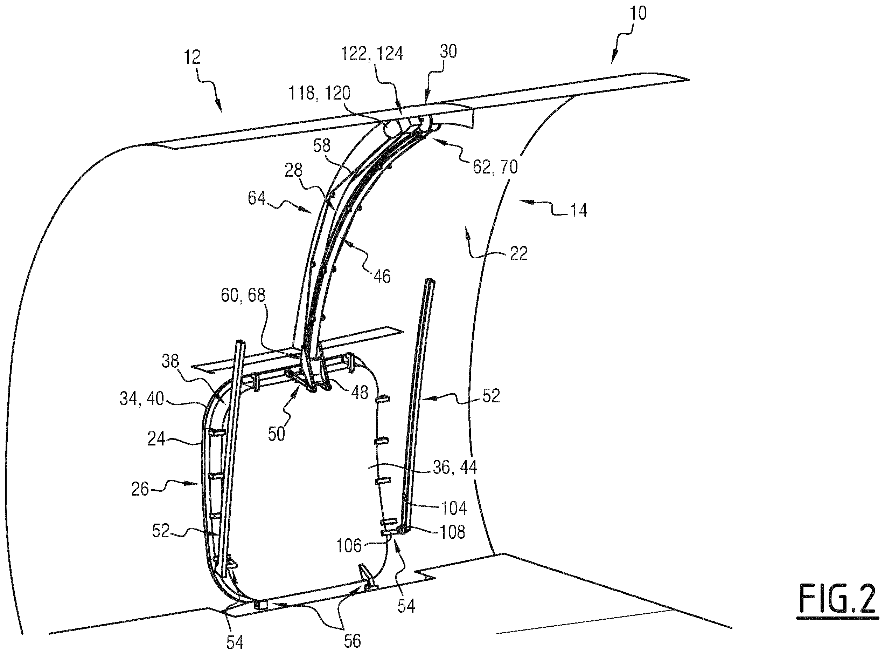

Un aéronef 10 est illustré sur la figure 1, un détail d'un aéronef 10 comprenant un mécanisme de porte d'aéronef 12 étant illustré sur la figure 2.

L'aéronef 10 présente de préférence une masse maximale au décollage (maximum takeoff weight MTOW en anglais) inférieure à 55000 kg.

De plus, l'aéronef 10 est configuré pour un nombre maximal de passagers autorisés à bord (PAX) inférieur ou égal à 19.

Il s'agit par exemple d'un avion d'affaires.

L'aéronef 10 comprend une structure 14, désignée par la suite sous les termes « structure d'aéronef ».

L'aéronef 10 comprend typiquement un système avionique 16 et un dispositif 18 de production et/ou de stockage d'électricité.

L'aéronef 10 s'étend suivant une direction longitudinale entre un avant et un arrière.

Plus précisément, l'aéronef 10 comprend un nez disposé à l'avant de l'aéronef 10 et une dérive disposée à l'arrière.

La structure d'aéronef 14 est par exemple un fuselage.

La structure d'aéronef 14 présente une surface extérieure 20 et une surface intérieure 22.

La surface extérieure 20 est en contact avec une masse d'air extérieure à l'aéronef 10.

La surface intérieure 22 délimite un volume intérieur.

Dans l'exemple préféré de la figure 2, la structure d'aéronef 14 définit un compartiment de soute à bagages de l'aéronef.

Le compartiment de soute est en particulier destiné à entreposer des bagages ou du matériel interdits en cabine voyageur par la réglementation aérienne.

Par exemple, le compartiment de soute est destiné à entreposer des bagages dont les dimensions dépassent les dimensions autorisées en cabine voyageur ou dont la masse dépasse celle autorisée en cabine voyageur.

En particulier, le compartiment de soute est dépourvu de sièges.

De plus, la structure d'aéronef 14 délimite une ouverture 24.

L'ouverture 24 est ainsi définie dans le compartiment de soute à bagages.

L'ouverture 24 présente des dimensions propres à permettre à un opérateur d'entrer à l'intérieur de la structure d'aéronef 14 depuis l'extérieur de la structure d'aéronef 14.

Les dimensions de l'ouverture 24 sont aussi propres à permettre le passage de bagages dont les dimensions sont interdites en cabine voyageur.

Pour cela, l'ouverture 24 est traversante. Elle joint ainsi la surface extérieure 20 à la surface intérieure 22 de la structure d'aéronef 14.

L'ouverture 24 présente ici une forme sensiblement rectangulaire, avec des sommets arrondis.

Le mécanisme 12 de porte d'aéronef comprend au moins ladite structure d'aéronef 14, une porte d'aéronef 26 et un système de guidage 28.

Dans le mode préféré de réalisation de la figure 2, le mécanisme 12 comprend aussi un motoréducteur 30 et par exemple un système de commande électrique 32 du motoréducteur 30.

Comme indiqué ci-dessus, la porte 26 est une porte de soute à bagages, dans l'exemple de la figure 2.

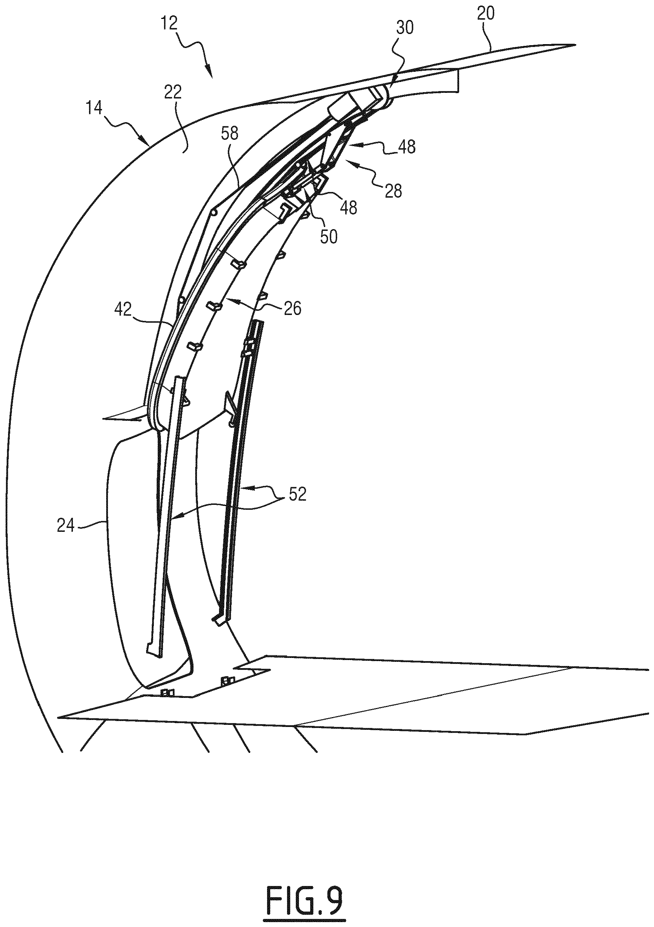

La porte 26 est montée mobile par rapport à la structure d'aéronef 14 entre une position d'obturation, illustrée sur la figure 2 dans laquelle la porte 26 obture l'ouverture 24, et une position de libération, illustrée sur la figure 9 dans laquelle la porte 26 est disposée à l'écart de l'ouverture 24.

En particulier, les figures 2 puis 6 à 9, dans cet ordre, illustrent un déplacement complet de la porte 26 depuis la position d'obturation jusqu'à la position de libération.

Dans la position d'obturation, la porte 26 obture de manière étanche l'ouverture 24.

Dans la position de libération, la porte 26 est disposée à l'écart de l'ouverture 24.

De plus, dans la position de libération, la porte 26 et l'ouverture 24 ne se superposent pas, en projection sur la surface intérieure 22 de la structure d'aéronef 14.

Plus précisément, dans la position de libération, la porte 26 est disposée intégralement au-dessus de l'ouverture 24, en projection dans un plan vertical.

Ainsi, dans la position de libération, un opérateur peut entrer par l'ouverture 24 à l'intérieur de la structure d'aéronef 14 depuis l'extérieur de la structure d'aéronef 14, sans que la porte 26 ne gêne le passage.

La porte 26 comprend une embase 34, un corps de support 36 faisant saillie vers l'intérieur de la structure d'aéronef 14 à partir de l'embase 34, et un épaulement 38 entre l'embase 34 et le corps de support 36.

L'embase 34 est propre à être appliquée contre la structure d'aéronef 14, lorsque la porte 26 est dans la position d'obturation.

L'embase 34 présente un contour extérieur 40 ayant par exemple des dimensions sensiblement égales à celles de l'ouverture 24, en projection sur la structure d'aéronef 14.

De plus, les dimensions du contour extérieur 40 de l'embase 34 sont supérieures à celles du corps de support 36, en projection sur la surface intérieure 22 de la structure d'aéronef 14.

La porte 26 présente une face extérieure 42 et une face intérieure 44.

La face extérieure 42 de la porte 26 est en contact avec une masse d'air extérieure à l'aéronef 10, lorsque la porte 26 est dans la position d'obturation.

En particulier, la face extérieure 42 de la porte 26 affleure avec la surface extérieure 20 de la structure d'aéronef 14, lorsque la porte 26 est dans la position d'obturation.

La face intérieure 44 de la porte 26 est ici définie par le corps de support 36.

De préférence, la face intérieure 44 est dépourvue de poignée. En particulier, la face intérieure 44 est dépourvue de saillie et de creux

La face intérieure 44 et la structure d'aéronef 14 présentent par exemple un même rayon de courbure.

La porte 26 est par exemple monobloc.

Le système de guidage 28 est configuré pour guider un déplacement de la porte 26 entre lesdites positions d'obturation et de libération.

Ici et par la suite, par les termes « un déplacement de la porte 26 entre lesdites positions d'obturation et de libération », on entend soit un déplacement de la porte 26 depuis la position d'obturation jusqu'à la position de libération, soit un déplacement de la porte 26 depuis la position de libération jusqu'à la position d'obturation.

Pour cela, le système de guidage 28 comprend au moins un rail principal 46 fixe par rapport à la structure d'aéronef 14 et un chariot principal 48 mécaniquement lié à la porte 26.

Le système de guidage 28 comprend aussi au moins une bielle 50 propre à verrouiller la porte 26 dans la position d'obturation comme détaillé par la suite.

Par exemple, le système de guidage 28 comprend au moins un rail latéral 52 fixe par rapport à la structure d'aéronef 14, de préférence deux rails latéraux 52, et au moins un chariot latéral 54 mécaniquement lié à la porte 26, de préférence deux chariots latéraux 54.

De plus, le système de guidage 28 comprend de préférence au moins deux couples 56 de butées de pivot, décrits plus en détail par la suite.

En outre, le système de guidage 28 comprend au moins un organe de transmission mécanique 58 pour le déplacement de la porte 26.

Le rail principal 46 s'étend suivant une courbe inscrite dans un plan de déplacement.

Ce plan de déplacement est celui du déplacement de la porte 26 entre lesdites positions d'obturation et de libération.

Le système de guidage 28 est de préférence configuré pour que le plan de déplacement soit perpendiculaire à la direction longitudinale de l'aéronef 10.

Le rail principal 46 s'étend le long de sa courbe d'extension entre une première extrémité 60 approchée de l'ouverture 24 et une deuxième extrémité 62 éloignée de l'ouverture 24.

Le rail principal 46 est par exemple courbé.

Comme illustré sur la figure 9, le rail principal 46 est disposé entre la porte 26 et la structure d'aéronef 14, lors d'au moins une partie du déplacement de la porte 26 entre lesdites positions d'obturation et de libération.

Plus précisément, lors de cette partie du déplacement, le rail principal 46 est disposé entre la face extérieure 42 de la porte 26 et la surface intérieure 22 de la structure d'aéronef 14.

Cette partie du déplacement comprend par exemple au moins la position de libération de la porte 26 (figure 9). Plus précisément, cette partie du déplacement débute ou termine par la porte 26 en position de libération.

En particulier, le rail principal 46 est disposé entre la porte 26 et la structure d'aéronef 14, lorsque la porte 26 est en position de libération.

Comme illustré sur la figure 2, le rail principal 46 est disposé au-dessus de la porte 26, en projection dans un plan vertical, lorsque la porte 26 est en position d'obturation.

De plus, le rail principal 46 est disposé au-dessus de l'ouverture 24. En particulier, la première extrémité approchée 60 du rail principal 46 est disposée au-dessus de l'ouverture 24.

En coupe dans le plan de déplacement, le rail principal 46 et la porte 26 présentent chacun une longueur prédéterminée respective, la longueur prédéterminée du rail principal 46 étant supérieure à la longueur prédéterminée de la porte 26.

Le rail principal 46 est fixé notamment sur une traverse 64, la traverse 64 étant rapportée sur la surface intérieure 22 de la structure d'aéronef 14. En variante, le rail principal 46 est fixé sur la surface intérieure 22 de la structure d'aéronef 14.

Le rail principal 46 définit deux rainures 66 opposées.

Chacune des rainures 66 du rail principal 46 s'étend suivant la courbe d'extension.

Le rail principal 46 présente une section transversale sensiblement de forme en H.

Le mécanisme 12 comprend par exemple une première butée d'arrêt 68 du chariot principal 48 en position d'obturation de la porte 26 et une deuxième butée d'arrêt 70 du chariot principal 48 en position de libération de la porte 26.

La première butée d'arrêt 68 du chariot principal 48 est par exemple disposée à la première extrémité 60 du rail principal 46.

La deuxième butée d'arrêt 70 du chariot principal 48 est par exemple disposée à la deuxième extrémité éloignée 62 du rail principal 46.

Plus précisément, dans cet exemple, le chariot principal 48 est en butée contre la première butée d'arrêt 68 du rail principal 46, lorsque la porte 26 est en position d'obturation, et est en butée contre la deuxième butée d'arrêt 70 du rail principal 46, lorsque la porte 26 est en position de libération.

Alternativement, la première butée d'arrêt 68 est réalisée entre au moins une des bielles 50 et la porte 26.

Alternativement, la deuxième butée d'arrêt 70 est réalisée par un capteur de position du chariot principal 48 compris dans le motoréducteur 30.

Le chariot principal 48 est propre à coulisser sur le rail principal 46 lors du déplacement de la porte 26 entre lesdites positions d'obturation et de libération.

Il est propre à coulisser entre les première et deuxième butées d'arrêt 68, 70 du rail principal 46.

Le chariot principal 48 comprend ainsi un corps de base 72 et au moins un organe de coulissement 74 avec le rail principal 46.

Le corps de base 72 est par exemple monobloc.

Comme illustré sur la figure 2, le corps de base 72 du chariot principal 48 présente une forme allongée s'étendant au-delà de la première extrémité approchée 60 du rail principal 46, lorsque la porte 26 est dans la position d'obturation.

De plus, la forme allongée du corps de base 72 s'étend au-delà d'un bord supérieur de l'ouverture 24, lorsque la porte 26 est dans la position d'obturation. En particulier, la forme allongée présente une région qui se superpose avec la porte 26, en projection sur la porte 26.

Plus précisément, la forme allongée du corps de base 72 s'étend au-delà d'une extrémité d'articulation 86 de chaque bielle 50 avec la porte 26, lorsque la porte 26 est dans la position d'obturation. En particulier, la forme allongée se superpose avec l'extrémité d'articulation 86 de chaque bielle 50 avec la porte 26, en projection sur la surface intérieure 22 de la structure d'aéronef 14.

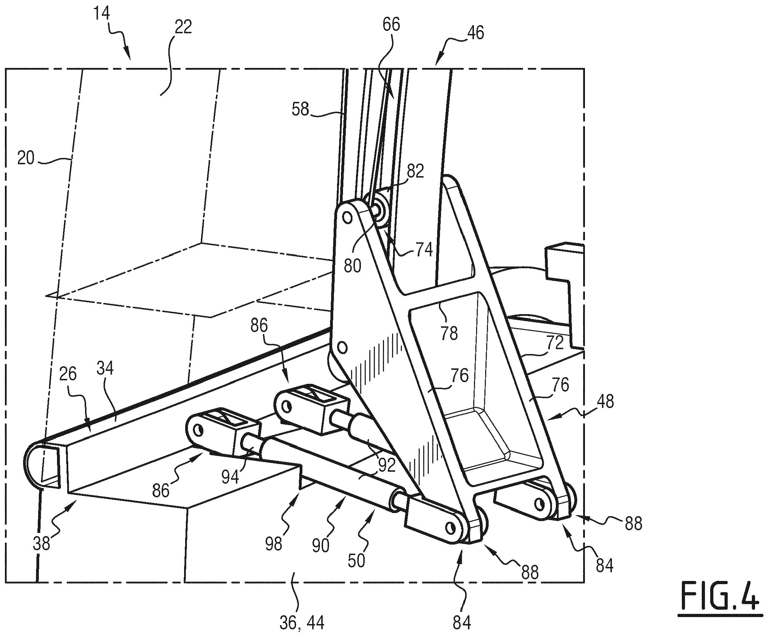

Dans le mode de réalisation de la figure 4, le corps de base 72 comprend par exemple deux plaques 76 reliées l'une à l'autre par une paroi transversale 78.

Les deux plaques 76 sont disposées de part et d'autre du rail principal 46.

Les deux plaques 76 sont par exemple sensiblement identiques.

Chaque plaque 76 est en partie en regard d'au moins une des rainures 66 du rail principal 46.

Chaque plaque 76 présente une forme sensiblement triangulaire. Ladite forme présente ainsi trois arêtes reliant, deux à deux, trois sommets arrondis.

Un premier sommet et un deuxième sommet de chaque plaque 76 est disposé en regard d'une des rainures 66 du rail principal 46.

Ainsi, en projection sur le plan de déplacement, le premier sommet et le deuxième sommet sont superposés avec le rail principal 46.

De plus, chaque plaque 76 s'étend au-delà de la première extrémité 60 du rail principal 46, et de préférence au-delà du bord supérieur de l'ouverture 24, lorsque la porte 26 est dans la position d'obturation.

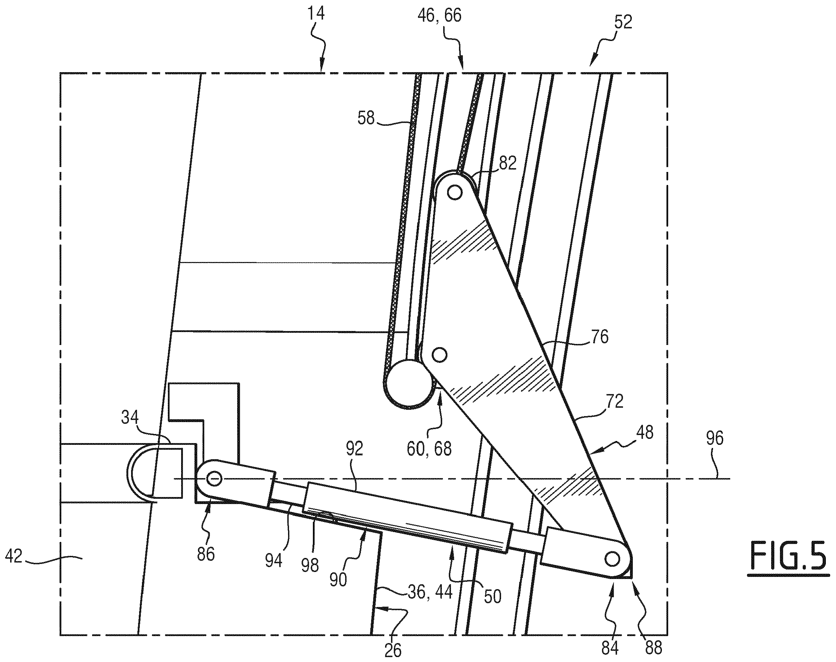

En outre, comme illustré sur la figure 5, chaque plaque 76 s'étend au-delà de l'extrémité d'articulation 86 de chaque bielle 50 avec la porte 26, lorsque la porte 26 est dans la position d'obturation.

Plus précisément, un troisième sommet de chaque plaque 76 est disposé au-delà de l'extrémité d'articulation 86 de chaque bielle 50 avec la porte 26, lorsque la porte 26 est dans la position d'obturation.

Dans le mode de réalisation préféré de la figure 4, le chariot principal 48 comprend une pluralité d'organes de coulissement 74. En variante, le chariot principal 48 ne comprend qu'un seul organe de coulissement 74, plus que le nombre d'organes de coulissement 74 illustrés sur la figure 4 ou moins que le nombre d'organes illustrés.

En particulier, le chariot principal 48 comprend deux couples d'organes de coulissement 74 opposés par rapport au rail principal 46. En variante, le chariot principal 48 comprend un seul couple ou plus de deux couples d'organes de coulissement opposés.

Les deux organes de coulissement 74 de chaque couple sont disposés à la même position le long du rail principal 46.

Chaque organe de coulissement 74 est fixé au corps de base 72 du chariot principal 48.

Lors du déplacement de la porte 26 entre lesdites positions d'obturation et de libération, chaque organe de coulissement 74 est en contact avec le rail principal 46 et coulisse le long d'une des rainures 66 du rail principal 46.

Chaque organe de coulissement 74 maintient le corps de base 72 à l'écart du rail principal 46.

Comme illustré sur la figure 4, chaque organe de coulissement 74 comprend par exemple une tige 80 solidaire d'un organe de glissement 82.

Chaque organe de coulissement 74 est fixé à un desdits premier et deuxième sommets de la forme triangulaire d'une des plaques 76 du corps de base 72.

Plus précisément, la tige 80 de chaque organe de coulissement 74 est fixée ainsi au corps de base 72.

L'organe de glissement 82 est propre à coopérer avec le rail principal 46. Il est reçu dans une des rainures 66 du rail principal 46.

L'organe de glissement 82 présente une surface périphérique circulaire.

La surface périphérique de l'organe de glissement 82 est en contact avec le rail principal 46.

Dans l'exemple illustré sur la figure 4, le système de guidage 28 comprend deux bielles 50. En variante cependant, le système de guidage 28 n'en comprend qu'une seule. Dans encore une autre variante, le système de guidage 28 comprend plus de deux bielles 50.

Les bielles 50 sont agencées parallèles entre elles.

Au cours du déplacement de la porte 26 entre les positions d'obturation et de libération, chaque bielle 50 se déplace de préférence en étant inscrite dans un plan parallèle au plan de déplacement.

Chaque bielle 50 est telle que le chariot principal 48 est mécaniquement lié à la porte 26 par l'intermédiaire de la bielle 50.

Le chariot principal 48 est ainsi dépourvu de contact avec la porte 26.

Plus précisément, chaque bielle 50 est articulée au chariot principal 48 d'une part et à la porte 26 d'autre part.

En d'autres termes, chaque bielle 50 présente une première extrémité d'articulation 84 avec le chariot principal 48, et une deuxième extrémité d'articulation 86 avec la porte 26 opposée à la première extrémité d'articulation 84.

La deuxième extrémité d'articulation 86 avec la porte 26 est disposée sur une surface supérieure du corps de support 36 de la porte 26.

De préférence, pour chaque bielle 50, en projection dans le plan de déplacement, un angle entre la bielle 50 et le chariot principal 48 est limité par une butée d'angle 88 disposée sur la bielle 50 ou sur le chariot principal 48.

Chaque bielle 50 comporte un système de rappel en extension 90 configuré pour exercer une force élastique sur le chariot principal 48.

Par exemple, ledit système de rappel en extension 90 comporte au moins un organe déformable élastiquement configuré pour exercer la force élastique sur le chariot principal 48.

L'organe déformable élastiquement est par exemple un ressort.

Ledit système de rappel en extension 90 comprend par exemple un corps principal 92 creux, un corps secondaire 94 propre à coulisser dans le corps principal 92, et ledit organe déformable élastiquement contraignant le corps secondaire 94 vers l'extérieur du corps principal 92.

La première extrémité d'articulation 84 avec le chariot principal 48 est réalisée par le corps secondaire 94 ou le corps principal 92.

Chaque bielle 50 est propre à verrouiller la porte 26 en position d'obturation.

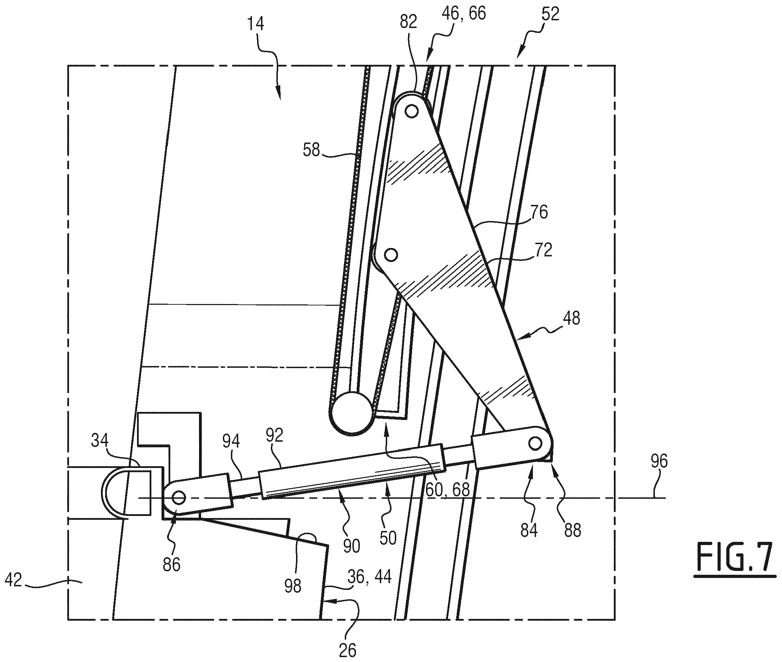

Plus précisément, comme illustré sur les figures 5 et 7, la bielle 50 est propre à s'arcbouter par rapport au chariot principal 48.

En particulier, la bielle 50 est agencée au-delà d'une limite d'arc-boutement 96 par rapport au chariot principal 48, lorsque la porte 26 est dans la position d'obturation.

La limite d'arc-boutement 96 est une position de la bielle 50 par rapport au chariot principal 48, à partir de laquelle la force élastique exercée par le système de rappel en extension 90 de la bielle 50 change de sens par rapport à la courbe d'extension du rail principal 46.

Lorsque la bielle 50 est d'un côté de la limite d'arc-boutement 96, la force élastique exercée par le système de rappel en extension 90 de la bielle 50 sur le chariot principal 48 est orientée vers la deuxième extrémité éloignée 62 du rail principal 46, et lorsque la bielle 50 passe de l'autre côté de la limite d'arc-boutement 96, la force élastique exercée par le système de rappel en extension 90 de la bielle 50 sur le chariot principal 48 est orientée à l'opposé de la deuxième extrémité éloignée 62 du rail principal 46 et s'oppose au déplacement de la porte 26 vers la position de libération.

Dans l'exemple illustré sur la figure 5, la première extrémité d'articulation 84 de la bielle 50 est pour cela liée avec une région du corps de base 72 du chariot principal 48 qui est disposée au-delà de la première extrémité approchée 60 du rail principal 46, lorsque la porte 26 est dans la position d'obturation.

En particulier, la première extrémité d'articulation 84 de la bielle 50 est liée au troisième sommet d'une des plaques 76 du corps de base 72 du chariot principal 48.

De plus, la surface supérieure du corps de support 36 comprend par exemple un évidement oblique 98 recevant chaque bielle 50, lorsque la porte 26 est en position d'obturation. En variante, l'ensemble de la surface supérieure du corps de support 36 s'étend ainsi de manière oblique par rapport à l'embase 34 de la porte 26.

Dans l'exemple de la figure 2, le système de guidage 28 comprend deux rails latéraux 52 et un chariot latéral 54 par rail latéral 52. En variante, le système de guidage 28 n'en comprend pas. Dans une autre variante, le système de guidage 28 comprend un seul rail latéral 52 et un chariot latéral 54. Dans encore une autre variante, le système de guidage 28 comprend plus de deux rails latéraux 52 et un chariot latéral 54 pour chaque rail latéral 52.

Chaque rail latéral 52 est propre à coopérer avec le chariot latéral 54 associé de sorte que le chariot latéral 54 associé soit propre à coulisser sur le rail latéral 52 lors du déplacement de la porte 26 entre lesdites positions d'obturation et de libération.

Chaque rail latéral 52 s'étend dans un plan parallèle au plan de déplacement.

Comme illustré sur la figure 2, chaque rail latéral 52 présente par exemple une région s'étendant suivant une droite.

Les deux rails latéraux 52 sont ici disposés de part et d'autre du plan de déplacement.

En projection sur la structure d'aéronef 14, chaque rail latéral 52 et la porte 26 sont disposés à l'écart l'un de l'autre.

Plus précisément, chaque rail latéral 52 et la porte 26 ne se superposent pas en projection sur la surface intérieure 22 de la structure d'aéronef 14, ni en position d'obturation de la porte 26, ni en position de libération, ni pendant tout le déplacement de la porte 26 entre lesdites positions d'obturation et de libération.

En particulier, en projection sur la structure d'aéronef 14, les deux rails latéraux 52 sont ici disposés de part et d'autre de la porte 26, lorsque la porte 26 est en position d'obturation.

Chaque rail latéral 52 présente une rainure 104.

La section transversale de chaque rail latéral 52 est par exemple sensiblement de forme en U.

Chaque chariot latéral 54 comprend un corps de base 106 et un organe de glissement 108 avec le rail latéral 52.

Le corps de base 106 du chariot latéral 54 est par exemple monobloc.

Le corps de base 106 est fixé à la porte 26.

L'organe de glissement 108 est fixé au corps de base 106 du chariot latéral 54.

Lors du déplacement de la porte 26 entre lesdites positions d'obturation et de libération, l'organe de glissement 108 est en contact avec le rail latéral 52 et coulisse le long de la rainure 104 du rail latéral 52.

L'organe de glissement 108 maintient le corps de base 106 du chariot latéral 54 à l'écart du rail latéral 52.

L'organe de glissement 108 est propre à coopérer avec le rail latéral 52. Il est reçu dans la rainure 104 du rail latéral 52.

L'organe de glissement 108 présente une surface périphérique circulaire.

La surface périphérique de l'organe de glissement 108 est en contact avec le rail latéral 52.

Dans le mode de réalisation préféré des figures 2, 3 et 8, les couples de butées 56 du système de guidage 28 forment un support de pivot de la porte 26 par rapport à la structure lors d'au moins une partie du déplacement de la porte 26 entre lesdites positions d'obturation et de libération.

Cette partie du déplacement de la porte 26 comprend la position d'obturation. Plus précisément, cette partie du déplacement débute ou termine par la porte 26 en position d'obturation.

Chaque couple de butées 56 comprend une butée supérieure 114 solidaire de la porte 26 et une butée inférieure 116 solidaire de la structure d'aéronef 14.

Lorsque les couples de butées 56 forment le support de pivot de la porte 26, les butées inférieure et supérieure 114, 116 de chaque couple 56 sont respectivement en contact.

Un axe pivot passe alors par chaque couple 56 en étant perpendiculaire audit plan de déplacement.

Par « un axe pivot passant par chaque couple », on entend un axe passant par un centre de chaque surface de contact entre la butée supérieure 114 et la butée inférieure 116 de chaque couple 56.

Pour chaque couple 56, chaque butée supérieure 114 est disposée verticalement au-dessus de la butée inférieure 116.

Chaque butée inférieure 116 est disposée verticalement en dessous d'un bord inférieure de la porte 26, lorsque la porte 26 est dans la position d'obturation.

De plus, pour chaque couple de butées 56, l'une de la butée supérieure 114 et de la butée inférieure 116 est un doigt et l'autre est un logement propre à recevoir une extrémité de contact du doigt.

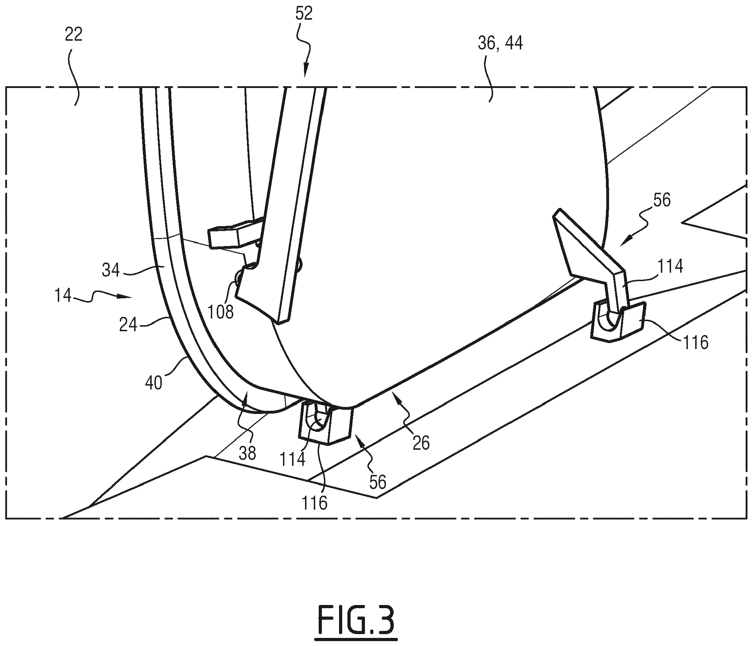

Ainsi, dans l'exemple illustré sur les figures 2 et 3, chaque butée supérieure 114 est un tel doigt et chaque butée inférieure 116 est un tel logement.

L'extrémité de contact du doigt avec le logement associé est de préférence sphérique.

Comme illustré sur la figure 3, chaque logement présente par exemple une gouttière présentant une section en U. En variante, chaque logement présente une empreinte sphérique. Dans encore une autre variante, chaque logement présente toute forme convenable pour recevoir l'extrémité de contact du doigt associé.

Dans l'exemple de la figure 2, le système de guidage 28 comprend deux organes de transmission mécanique 58. En variante, le système de guidage 28 comprend un seul organe de transmission mécanique 58. Dans encore une autre variante, le système de guidage 28 comprend plus de deux organes de transmission mécanique 58.

Chaque organe de transmission mécanique 58 est par exemple un câble, une courroie ou une chaîne.

Chaque organe de transmission mécanique 58 est solidaire du chariot principal 48 et est relié au motoréducteur 30.

Chaque organe de transmission mécanique 58 est allongé.

En particulier, chaque organe de transmission mécanique 58 s'étend entre deux extrémités opposées. Chaque extrémité de l'organe de transmission mécanique 58 est dans cet exemple attachée au chariot principal 48.

Dans le mode de réalisation particulier des figures 4 et 5, chaque extrémité de l'organe de transmission mécanique 58 est attachée à un des organes de coulissement du chariot principal 48, par exemple à la tige 80 de l'organe de coulissement 74.

Ici, chaque extrémité de l'organe de transmission mécanique 58 est attachée respectivement à des organes de coulissement 74 différents.

Par exemple, chaque organe de transmission mécanique 58 s'étend d'un même côté du plan de déplacement.

Le motoréducteur 30 est propre à fournir, à lui seul, l'énergie mécanique nécessaire pour déplacer la porte 26 par rapport à la structure entre lesdites positions d'obturation et de libération.

Plus précisément, le motoréducteur 30 est propre à actionner mécaniquement chaque organe de transmission mécanique 58 pour déplacer la porte 26 par rapport à la structure d'aéronef 14 entre lesdites positions d'obturation et de libération.

Par « actionner mécaniquement », on entend que le motoréducteur 30 impose un déplacement de chaque organe de transmission mécanique 58 pour déplacer la porte 26 par rapport à la structure d'aéronef 14.

Le motoréducteur 30 comprend un moteur électrique 118, un arbre de transmission 120, un réducteur 122 et un arbre de sortie 124.

Le moteur électrique 118 est propre à convertir une énergie électrique en énergie mécanique.

Le moteur électrique 118 présente une configuration de fonctionnement nominale, dans laquelle il convertit une énergie électrique en énergie mécanique, et une configuration d'arrêt.

Le moteur électrique 118 comprend typiquement un rotor et un stator.

Le rotor fait tourner l'arbre de transmission 120 à une vitesse nominale, lorsque le moteur est dans la configuration de fonctionnement nominale.

Lorsque le moteur électrique 118 est dans la configuration d'arrêt, le rotor et le stator sont immobiles l'un par rapport à l'autre.

Le réducteur 122 est connecté à l'arbre de transmission 120 et à l'arbre de sortie 124.

Le réducteur 122 est propre à faire tourner l'arbre de sortie 124 à une vitesse inférieure à la vitesse nominale de rotation de l'arbre de transmission 120 imposée par le moteur électrique 118.

Le réducteur 122 est par exemple formé par un ensemble d'engrenages.

Ainsi, une fois que la porte 26 atteint la position d'obturation ou la position de libération, le moteur électrique 118 est configuré pour passer de la configuration de fonctionnement nominale à la configuration d'arrêt.

Le motoréducteur 30 est de préférence irréversible.

Par « irréversible », on entend que, lorsque le moteur électrique 118 est dans la configuration d'arrêt, l'arbre de transmission 120 est bloqué en rotation. En particulier, un couple extérieur exercé sur l'arbre de transmission 120 n'est pas propre à faire tourner le rotor du moteur électrique 118.

Ainsi, lorsque la porte 26 est dans la position de libération et que le moteur électrique 118 est dans la configuration d'arrêt, la porte 26 est maintenue en position.

Le système de commande électrique 32 du motoréducteur 30 est propre à faire passer le moteur électrique 118 de la configuration d'arrêt à la configuration de fonctionnement nominale, lorsqu'il est activé.

En particulier, le système de commande électrique 32 est propre à être activé manuellement par un opérateur.

Le système de commande électrique 32 est par exemple agencé dans la structure d'aéronef 14.

Le système avionique 16 est destiné à l'aide au pilotage de l'aéronef 10.

Le dispositif 18 de production et/ou de stockage d'électricité est configuré pour alimenter le système avionique 16 et le motoréducteur 30.

En particulier, le dispositif 18 de production et/ou de stockage d'électricité est connecté électriquement d'une part au système avionique 16 et d'autre part au motoréducteur 30.

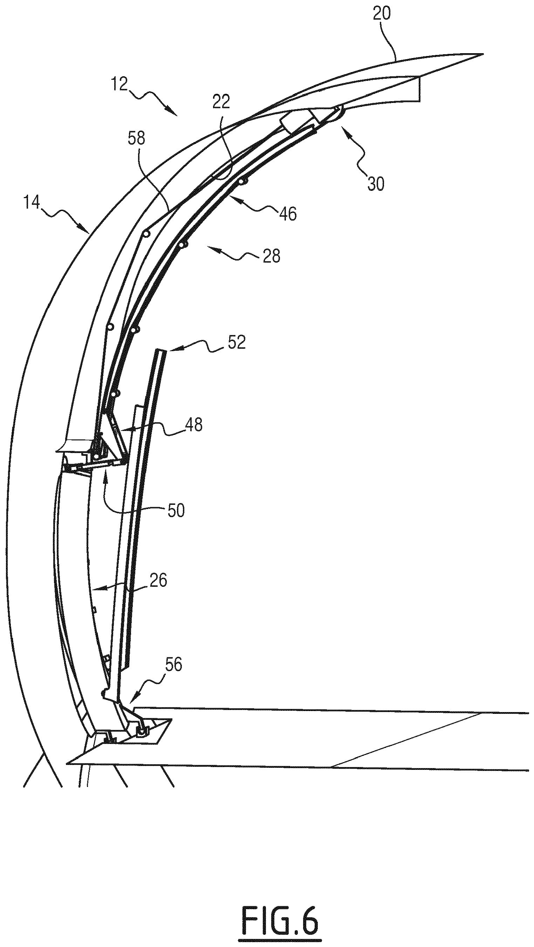

Un procédé de déplacement de la porte 26 d'aéronef va maintenant être décrit, en référence aux figures 2, et 6 à 9.

Le procédé comprend la fourniture du mécanisme 12 décrit ci-dessus.

Initialement, la porte 26 est soit dans la position d'obturation, soit dans la position de libération.

Le procédé comprend alors le déplacement de la porte 26 vers l'autre position. Le déplacement est guidé par le système de guidage 28, le rail principal 46 étant disposé entre la porte 26 et la structure lors d'au moins une partie du déplacement de la porte 26, comme décrit plus en détail par la suite.

Dans l'exemple plus précis illustré sur les figures, la porte 26 est initialement dans la position d'obturation.

Le déplacement illustré est celui depuis la position d'obturation jusqu'à la position de libération.

Initialement, la force élastique exercée par le système de rappel en extension 90 de chaque bielle 50 sur le chariot principal 48 s'oppose au déplacement de la porte 26 vers la position de libération.

Lors du déplacement de la porte 26 entre lesdites positions d'obturation et de libération, chaque organe de coulissement 74 est en contact avec le rail principal 46 et coulisse le long d'une des rainures 66 du rail principal 46.

De même, lors de ce déplacement chaque organe de glissement 108 est en contact avec le rail latéral 52 associé et coulisse le long de la rainure 104 du rail latéral 52.

L'énergie mécanique nécessaire pour déplacer la porte 26 par rapport à la structure entre lesdites positions d'obturation et de libération est préférentiellement fournie par le motoréducteur 30.

Plus précisément, lors du déplacement de la porte 26 entre lesdites positions, le motoréducteur 30 actionne mécaniquement chaque organe de transmission mécanique 58 pour déplacer la porte 26 par rapport à la structure d'aéronef 14.

Lors du déplacement de la porte 26 entre lesdites positions, le motoréducteur 30 impose un déplacement de chaque organe de transmission mécanique 58 pour déplacer la porte 26 par rapport à la structure d'aéronef 14.

Initialement, le moteur électrique 118 du motoréducteur 30 est dans la configuration d'arrêt.

Le déplacement est déclenché ici par l'activation du système de commande électrique 32 du motoréducteur 30, qui fait passer le moteur électrique 118 de la configuration d'arrêt à la configuration de fonctionnement nominale.

Le déplacement comprend une première étape de déverrouillage de la porte 26.

Au cours de cette première étape de déverrouillage, le chariot principal 48 est tiré par le motoréducteur 30, par l'intermédiaire de chaque organe de transmission mécanique 58.

Chaque bielle 50 passe de la position illustrée sur la figure 5 à la position illustrée sur la figure 7.

En particulier, chaque bielle 50 pivote, par rapport au chariot principal 48, en étant tirée par le chariot principal 48.

Chaque bielle 50 dépasse la limite d'arc-boutement 96 par rapport au chariot principal 48.

Ainsi, la force élastique exercée par le système de rappel en extension 90 de chaque bielle 50 sur le chariot principal 48 change de sens par rapport à la courbe d'extension du rail principal 46.

En particulier, la force élastique exercée par le système de rappel en extension 90 de chaque bielle 50 ne s'oppose plus au déplacement de la porte depuis la position d'obturation vers la position de libération.

La porte 26 est alors déverrouillée de sa position d'obturation.

Lors de cette étape de déverrouillage, la porte 26 est fixe en position par rapport à la structure d'aéronef 14.

En particulier, la deuxième extrémité d'articulation 86 avec la porte 26 de chaque bielle 50 reste fixe en position par rapport à la structure d'aéronef 14.

De plus, les butées inférieure et supérieure 114, 116 de chaque couple de butées 56 du système de guidage 28 sont respectivement en contact.

Le déplacement de la porte 26 comprend par la suite une étape de bascule de la porte 26.

Lors de cette étape de bascule, les couples de butées 56 du système de guidage 28 forment un support de pivot de la porte 26 par rapport à la structure. Plus précisément, les butées inférieure et supérieure 114, 116 de chaque couple 56 sont respectivement en contact.

Un axe pivot passe par chaque couple 56 en étant perpendiculaire audit plan de déplacement.

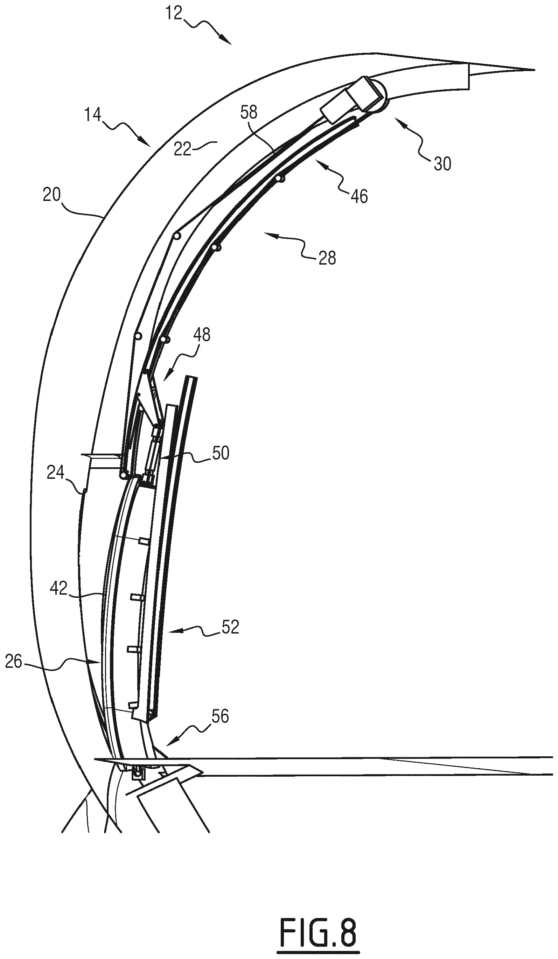

La porte 26 tourne autour de cet axe pivot depuis la position d'obturation jusqu'à une position prédéterminée de fin de rotation, telle que celle illustrée sur la figure 8.

La position prédéterminée de fin de rotation est une position de la porte ou un bord supérieur de la face extérieure 42 de la porte 26 au-delà de la première extrémité approchée 60 du rail principal 46.

La porte 26 ne bute donc pas contre le rail principal 46 lors de la suite du déplacement.

En outre, au cours de l'étape de bascule, le chariot principal 48 et chaque bielle 50 tirent la porte 26, et l'angle respectif entre chaque bielle 50 et le chariot principal 48 augmente jusqu'à un angle maximal limité par la butée d'angle 88.

Plus précisément, pour chaque bielle 50, lorsque la porte 26 atteint la position prédéterminée de fin de rotation, l'angle entre la bielle 50 et le chariot principal 48 se retrouve alors limité par la butée d'angle 88.

Comme illustré sur la figure 8, l'angle maximal est par exemple ici obtus.

Le déplacement de la porte 26 présente par la suite une étape de translation de la porte 26, au cours de laquelle, la porte 26 est tirée par la bielle 50 et le chariot le long du rail principal 46 jusqu'à la position de libération.

Dès le début de l'étape de translation, la butée inférieure 116 et la butée supérieure 114 de chaque couple 56 ne sont plus en contact l'une avec l'autre.

Lorsque la porte 26 atteint la position de libération (figure 9), le moteur électrique 118 du motoréducteur 30 passe dans la configuration d'arrêt.

La porte 26 est ainsi maintenue en position de libération.

En variante du procédé, la porte 26 est initialement dans la position de libération au début de l'étape de déplacement.

Les étapes du déplacement sont alors les mêmes que celles décrites ci-dessus mais mise en oeuvre en sens inverse.

En particulier, le déplacement se conclut par une étape verrouillage de la porte 26 en position d'obturation qui correspond à l'étape ci-dessus de déverrouillage mise en oeuvre en sens inverse.

A l'issue de l'étape de verrouillage, le moteur électrique 118 du motoréducteur 30 passe dans sa configuration d'arrêt.

La porte 26 est ainsi maintenue en position à la fois par le fait que le moteur électrique 118 du motoréducteur 30 soit dans cette configuration d'arrêt et par le verrouillage mis en oeuvre par chaque bielle 50.

En complément, dans le cas d'une panne du motoréducteur 30 et/ou du dispositif 18 de production et/ou de stockage d'électricité, il est toujours possible de déplacer la porte 26 entre ses deux positions.

Le déplacement du procédé comprend alors le débrayage du motoréducteur 30, et la manipulation manuelle du chariot principal 48 pour déverrouiller la porte 26 de sa position d'obturation. En variante, le déplacement du procédé comprend alors une commande manuelle sur le motoréducteur 30.

En variante du mécanisme 12 décrit ci-dessus, ledit système de rappel en extension 90 de la bielle 50 comprend un vérin à gaz en remplacement ou en complément de l'organe déformable élastiquement.

Grâce aux caractéristiques précédemment décrites, le mécanisme 12 selon l'invention présente une bonne ergonomie et une bonne robustesse.

L'invention réalise aussi une réduction significative de la masse.

De plus, le mécanisme 12 selon l'invention présente un faible encombrement en l'absence des compensateurs de masse.

En outre, la qualité perçue est grandement améliorée.

Enfin, l'ergonomie est encore plus améliorée dans le cas où le mécanisme comprend le motoréducteur 30, car il n'est pas nécessaire à l'opérateur de se placer dans une position contraignante pour déplacer la porte 26. Dans ce cas, les bielles 50 fournissent un dispositif de verrouillage compatible avec l'utilisation d'un tel motoréducteur 30 pour le déplacement de la porte 26.

## Revendications

1. Mécanisme (12) de porte d'aéronef, comportant au moins :
- une structure d'aéronef (14) délimitant une ouverture (24) ;
- une porte (26) d'aéronef montée mobile par rapport à la structure entre une position d'obturation, dans laquelle la porte (26) obture l'ouverture (24), et une position de libération, dans laquelle la porte (26) est disposée à l'écart de l'ouverture (24) ;
- un système de guidage (28) configuré pour guider un déplacement de la porte (26) entre lesdites positions d'obturation et de libération, le système de guidage (28) comprenant un rail principal (46) fixe par rapport à la structure et un chariot principal (48) mécaniquement lié à la porte (26), le chariot principal (48) étant propre à coulisser sur le rail principal (46) lors du déplacement de la porte (26) entre lesdites positions d'obturation et de libération ;
le rail principal (46) étant disposé entre la porte (26) et la structure lors d'au moins une partie du déplacement de la porte (26) entre lesdites positions d'obturation et de libération ;
**caractérisé en ce que** le système de guidage (28) comprend en outre au moins une bielle (50), le chariot principal (48) étant mécaniquement lié à la porte (26) par l'intermédiaire de la bielle (50), la bielle (50) étant articulée au chariot principal (48) d'une part et à la porte (26) d'autre part, la bielle (50) étant propre à verrouiller la porte (26) dans la position d'obturation, la bielle (50) comportant un système de rappel en extension (90) configuré pour exercer une force élastique sur le chariot principal (48), et la bielle (50) étant propre à s'arcbouter par rapport au chariot principal (48).

2. Mécanisme (12) selon la revendication 1, dans lequel le système de rappel en extension (90) de la bielle (50) comprend au moins un organe déformable élastiquement ou un vérin à gaz.

3. Mécanisme (12) selon l'une quelconque des revendications 1 ou 2, dans lequel le rail principal (46) s'étend suivant une courbe inscrite dans un plan de déplacement, et, en projection dans le plan de déplacement, un angle entre la bielle (50) et le chariot principal (48) est limité par une butée d'angle (88) disposée sur la bielle (50) ou sur le chariot principal (48).

4. Mécanisme (12) selon l'une quelconque des revendications précédentes, dans lequel le système de guidage (28) comprend en outre au moins deux couples de butées (56), chaque couple (56) comprenant une butée supérieure (114) solidaire de la porte (26) et une butée inférieure (116) solidaire de la structure (14), les couples de butées (56) formant un support de pivot de la porte (26) par rapport à la structure lors d'au moins une partie du déplacement de la porte (26) entre lesdites positions d'obturation et de libération.

5. Mécanisme (12) selon la revendication 4, dans lequel le rail principal (46) s'étend suivant une courbe inscrite dans un plan de déplacement, et, lorsque les couples de butées (56) forment un support de pivot de la porte (26), les butées inférieure et supérieure (114, 116) de chaque couple (56) sont respectivement en contact, un axe pivot passant par chaque couple (56) étant perpendiculaire audit plan de déplacement.

6. Mécanisme (12) selon l'une quelconque des revendications 4 ou 5, dans lequel, pour chaque couple de butées (56), l'une de la butée supérieure (114) et de la butée inférieure (116) est un doigt et l'autre est un logement propre à recevoir une extrémité du doigt.

7. Mécanisme (12) selon l'une quelconque des revendications précédentes, dans lequel le système de guidage (28) comprend en outre au moins un rail latéral (52) fixe par rapport à la structure d'aéronef (14), et un chariot latéral (54), le chariot latéral (54) étant mécaniquement lié à la porte (26) et propre à coulisser sur le rail latéral (52) lors du déplacement de la porte (26) entre lesdites positions d'obturation et de libération.

8. Mécanisme (12) selon l'une quelconque des revendications précédentes, dans lequel la porte (26) présente une face intérieure (44) dépourvue de saillie et de creux.

9. Mécanisme (12) selon l'une quelconque des revendications précédentes, comprenant un motoréducteur (30), le système de guidage (28) comprenant en outre au moins un organe de transmission mécanique (58), le ou chaque organe de transmission mécanique (58) étant solidaire du chariot principal (48) et étant relié au motoréducteur (30), le motoréducteur (30) étant propre à actionner mécaniquement le ou chaque organe de transmission mécanique (58) pour déplacer la porte (26) par rapport à la structure entre lesdites positions d'obturation et de libération.

10. Aéronef (10) comportant le mécanisme (12) selon l'une quelconque des revendications précédentes.

11. Aéronef (10) selon la revendication 10, dans lequel la structure définit un compartiment de soute à bagages, l'ouverture (24) étant définie dans le compartiment de soute à bagages, la porte (26) étant une porte de soute à bagages.

12. Aéronef (10) selon l'une quelconque des revendications 10 ou 11, dans lequel le mécanisme (12) est selon la revendication 9, l'aéronef (10) comprenant un système avionique (16) et un dispositif (18) de production et/ou de stockage d'électricité, le dispositif (18) de production et/ou de stockage d'électricité alimentant le système avionique (16) et le motoréducteur (30).

13. Procédé de déplacement d'une porte (26) d'aéronef comprenant :
- la fourniture d'un mécanisme (12) selon l'une quelconque des revendications 1 à 9, la porte (26) étant dans l'une de la position d'obturation et de la position de libération ; et
- le déplacement de la porte (26) vers l'autre de la position d'obturation et de la position de libération, le déplacement étant guidé par le système de guidage (28), le rail principal (46) étant disposé entre la porte (26) et la structure lors d'au moins une partie du déplacement de la porte (26).

## Patentansprüche

1. Mechanismus (12) für Luftfahrzeugtür, mindestens umfassend:
- eine Luftfahrzeugstruktur (14), die eine Öffnung (24) begrenzt;
- eine Tür (26) eines Luftfahrzeugs, die in Bezug auf die Struktur zwischen einer Verschlussposition, in der die Tür (26) die Öffnung (24) verschließt, und einer Freigabeposition, in der die Tür (26) von der Öffnung (24) entfernt angeordnet ist, beweglich montiert ist;
- ein Führungssystem (28), das konfiguriert ist, um eine Bewegung der Tür (26) zwischen der Verschluss- und der Freigabeposition zu führen, das Führungssystem (28) umfassend eine Hauptschiene (46), die in Bezug auf die Struktur feststehend ist, und einen Hauptschlitten (48), der mechanisch mit der Tür (26) verbunden ist, wobei der Hauptschlitten (48) geeignet ist, auf der Hauptschiene (46) zu gleiten, wenn die Tür (26) zwischen der Verschluss- und der Freigabeposition bewegt wird;
wobei die Hauptschiene (46) während mindestens eines Teils der Bewegung der Tür (26) zwischen der Verschluss- und der Freigabeposition zwischen der Tür (26) und der Struktur angeordnet ist;
**dadurch gekennzeichnet, dass** das Führungssystem (28) ferner mindestens eine Verbindungsstange (50) umfasst, wobei der Hauptschlitten (48) über die Verbindungsstange (50) mechanisch mit der Tür (26) verbunden ist, wobei die Verbindungsstange (50) einerseits an dem Hauptschlitten (48) und andererseits an der Tür (26) angelenkt ist, wobei die Verbindungsstange (50) geeignet ist, die Tür (26) in der Verschlussposition zu verriegeln, die Verbindungsstange (50) umfassend ein Dehnungsrückholsystem (90), das konfiguriert ist, um eine elastische Kraft auf den Hauptschlitten (48) auszuüben, und wobei die Verbindungsstange (50) geeignet ist, sich in Bezug auf den Hauptschlitten (48) zu biegen.

2. Mechanismus (12) nach Anspruch 1, wobei das Streckrückholsystem (90) der Verbindungsstange (50) mindestens ein elastisch verformbares Element oder eine Gasdruckfeder umfasst.

3. Mechanismus (12) nach einem der Ansprüche 1 oder 2, wobei sich die Hauptschiene (46) entlang einer Kurve erstreckt, die in eine Bewegungsebene eingeschrieben ist, und bei Projektion in die Bewegungsebene ein Winkel zwischen der Verbindungsstange (50) und dem Hauptschlitten (48) durch einen Winkelanschlag (88) begrenzt wird, der an der Verbindungsstange (50) oder an dem Hauptschlitten (48) angeordnet ist.

4. Mechanismus (12) nach einem der vorherigen Ansprüche, wobei das Führungssystem (28) ferner mindestens zwei Anschlagpaare (56) umfasst, jedes Paar (56) umfassend einen oberen Anschlag (114), der fest mit der Tür (26) verbunden ist, und einen unteren Anschlag (116), der fest mit der Struktur (14) verbunden ist, wobei die Anschlagpaare (56) während mindestens eines Teils der Bewegung der Tür (26) zwischen der Verschluss- und der Freigabeposition eine Schwenkhalterung für die Tür (26) in Bezug auf die Struktur bilden.

5. Mechanismus (12) nach Anspruch 4, wobei sich die Hauptschiene (46) entlang einer Kurve erstreckt, die in eine Bewegungsebene eingeschrieben ist, und, wenn die Anschlagpaare (56) eine Schwenkhalterung der Tür (26) bilden, der untere und der obere Anschlag (114, 116) von jedem Paar (56) jeweils in Kontakt sind, wobei eine Schwenkachse, die durch jedes Paar (56) verläuft, senkrecht zu der Bewegungsebene ist.

6. Mechanismus (12) nach einem der Ansprüche 4 oder 5, wobei für jedes Anschlagpaar (56) entweder der obere Anschlag (114) oder der untere Anschlag (116) ein Finger ist und der andere eine Aufnahme ist, die geeignet ist, ein Ende des Fingers aufzunehmen.

7. Mechanismus (12) nach einem der vorherigen Ansprüche, wobei das Führungssystem (28) ferner mindestens eine Seitenschiene (52), die in Bezug auf die Luftfahrzeugstruktur (14) feststehend ist, und einen Seitenschlitten (54) umfasst, wobei der Seitenschlitten (54) mechanisch mit der Tür (26) verbunden und geeignet ist, bei der Bewegung der Tür (26) zwischen der Verschluss- und der Freigabeposition auf der Seitenschiene (52) zu gleiten.

8. Mechanismus (12) nach einem der vorherigen Ansprüche, wobei die Tür (26) eine Innenseite (44) ohne Vorsprünge und Vertiefungen aufweist.

9. Mechanismus (12) nach einem der vorherigen Ansprüche, umfassend einen Getriebemotor (30), wobei das Führungssystem (28) ferner mindestens ein mechanisches Übertragungselement (58) umfasst, wobei das oder jedes mechanische Übertragungselement (58) fest mit dem Hauptschlitten (48) verbunden ist und mit dem Getriebemotor (30) verbunden ist, wobei der Getriebemotor (30) geeignet ist, das oder jedes mechanische Übertragungselement (58) mechanisch zu betätigen, um die Tür (26) in Bezug auf die Struktur zwischen der Verschluss- und der Freigabeposition zu bewegen.

10. Luftfahrzeug (10), umfassend den Mechanismus (12) nach einem der vorherigen Ansprüche.

11. Luftfahrzeug (10) nach Anspruch 10, wobei die Struktur einen Frachtraum definiert, wobei die Öffnung (24) in dem Frachtraum definiert ist und die Tür (26) eine Frachtraumtür ist.

12. Luftfahrzeug (10) nach einem der Ansprüche 10 oder 11, wobei der Mechanismus (12) nach Anspruch 9 ist, wobei das Luftfahrzeug (10) ein Avioniksystem (16) und eine Vorrichtung (18) zum Erzeugen und/oder Speichern von Elektrizität umfasst, wobei die Vorrichtung (18) zum Erzeugen und/oder Speichern von Elektrizität das Avioniksystem (16) und den Getriebemotor (30) versorgt.

13. Verfahren zum Bewegen einer Tür (26) eines Luftfahrzeugs, umfassend:
- Bereitstellen eines Mechanismus (12) nach einem der Ansprüche 1 bis 9, wobei die Tür (26) entweder in der Verschlussposition oder in der Freigabeposition ist; und
- Bewegen der Tür (26) in Richtung der anderen von der Verschlussposition und der Freigabeposition, wobei die Bewegung durch das Führungssystem (28) geführt wird, wobei die Hauptschiene (46) während mindestens eines Teils der Bewegung der Tür (26) zwischen der Tür (26) und der Struktur angeordnet ist.

## Claims

1. An aircraft door mechanism (12), including at least:
- an aircraft structure (14) delimiting an opening (24);
- an aircraft door (26) mounted moving relative to the structure between a closed off position, in which the door (26) closes off the opening (24), and a released position, in which the door (26) is positioned away from the opening (24);
- a guide system (28) configured to guide a movement of the door (26) between said closed off and released positions, the guide system (28) comprising a main rail (46) that is fixed relative to the structure and a main carriage (48) mechanically connected to the door (26), the main carriage (48) being able to slide on the main rail (46) during the movement of the door (26) between said closed off and released positions;
the main rail (46) being positioned between the door (26) and the structure during at least part of the movement of the door (26) between said closed off and released positions;
**characterized in that** the guide system (28) further comprises at least one connecting rod (50), the main carriage (48) being mechanically connected to the door (26) by means of the connecting rod (50), the connecting rod (50) being articulated to the main carriage (48) on the one hand and to the door (26) on the other hand, the connecting rod (50) being able to lock the door (26) in the closed off position, the connecting rod (50) including an extension return system (90) configured to exert an elastic force on the main carriage (48), and the connecting rod (50) being able to brace itself relative to the main carriage (48).

2. The mechanism (12) according to claim 1, wherein the extension return system (90) of the connecting rod (50) comprises at least one resiliently deformable member or gas cylinder.

3. The mechanism (12) according to any one of claims 1 or 2, wherein the main rail (46) extends along a curve fitted in a movement plane, and, projected in the movement plane, an angle between the connecting rod (50) and the main carriage (48) is limited by an angle stop (88) positioned on the connecting rod (50) or on the main carriage (48).

4. The mechanism (12) according to any one of the preceding claims, wherein the guide system (28) further comprises at least two pairs of stops (56), each pair (56) comprising an upper stop (114) secured to the door (26) and a lower stop (116) secured to the structure (14), the pairs of stops (56) forming a pivot support for the door (26) relative to the structure during at least part of the movement of the door (26) between said closed off and released positions.

5. The mechanism (12) according to claim 4, wherein the main rail (46) extends along a curve that lies in a movement plane, and, when the pairs of stops (56) form a pivot support of the door (26), the lower and upper stops (114, 116) of each pair (56) are respectively in contact, a pivot axis passing through each pair (56) being perpendicular to said movement plane.

6. The mechanism (12) according to any one of claims 4 or 5, wherein, for each pair of stops (56), one of the upper stop (114) and the lower stop (116) is a finger and the other is a housing able to receive one end of the finger.

7. The mechanism (12) according to any one of the preceding claims, wherein the guide system (28) further comprises at least one lateral rail (52) that is fixed relative to the aircraft structure (14), and a lateral carriage (54), the lateral carriage (54) being mechanically connected to the door (26) and able to slide on the lateral rail (52) during the movement of the door (26) between said closed off and released positions.

8. The mechanism (12) according to any one of the preceding claims, wherein the door (26) has an inner face (44) with no protrusion and indentation.

9. The mechanism (12) according to any one of the preceding claims, comprising a gear motor (30), the guide system (28) further comprising at least one mechanical transmission member (58), the or each mechanical transmission member (58) being secured to the main carriage (48) and being connected to the gear motor (30), the gear motor (30) being able to mechanically actuate the or each mechanical transmission member (58) in order to move the door (26) relative to the structure between said closed off and released positions.

10. An aircraft (10) including the mechanism (12) according to any one of the preceding claims;

11. The aircraft (10) according to claim 10, wherein the structure defines a baggage compartment, the opening (24) being defined in the baggage compartment, the door (26) being a baggage compartment door.

12. The aircraft (10) according to any one of claims 10 or 11, wherein the mechanism (12) is according to claim 9, the aircraft (10) comprising an avionics system (16) and an electricity production and/or storage device (18), the electricity production and/or storage device (18) supplying the avionics system (16) and the gear motor (30).

13. A method for moving an aircraft door (26), comprising:
- providing a mechanism (12) according to any one of claims 1 to 9, the door (26) being in one of the closed off position and the released position; and
- moving the door (26) toward the other of the closed off position and the released position, the movement being guided by the guide system (28), the main rail (46) being positioned between the door (26) and the structure during at least part of the movement of the door (26).
